# EUROPÄISCHE PATENTSCHRIFT

(11) **EP 1 020 335 B1**
(45) Veröffentlichungstag und Bekanntmachung des Hinweises auf die Patenterteilung: **29.06.2005**
(21) Anmeldenummer: 99124200.9
(22) Anmeldetag: 03.12.1999
(51) Int. Cl.: B60R 25/00

(54) **Verfahren zum Authentisieren eines Ersatzschlüssels zum Benutzen eines Fahrzeugs**
Authentication method for a substitute key to use a vehicle
Procédé d'authentification d'une clé de remplacement pour l'utilisation d'un véhicule

(30) Priorität: 15.01.1999 DE 19901277
(43) Veröffentlichungstag der Anmeldung: 19.07.2000
(73) Patentinhaber: Bayerische Motoren Werke Aktiengesellschaft, 80809 München (DE)
(72) Erfinder: Bartz, Rüdiger, 80809 München (DE)

(56) Entgegenhaltungen:
- EP-A- 0 671 528
- EP-A- 0 788 946
- EP-A- 0 870 654
- DE-C- 4 411 450

## Beschreibung

Die Erfindung bezieht sich auf ein Verfahren mit den Merkmalen des Oberbegriffs von Patentanspruch 1.

Ein derartiges Verfahren ist aus der EP-A-0 788 946 bekannt. Dabei werden mit Hilfe eines separaten, außerhalb des Fahrzeugs befindlichen Programmiergeräts von einer Zentrale fahrzeugteilespezifische Daten abgefragt, die von der Zentrale an das Programmiergerät und von diesem an das Fahrzeug weitergegeben werden, um dort decodiert zu werden. Obwohl dabei teilweise sogar mit einer doppelten Codierung gearbeitet wird, können beim bekannten Verfahren Probleme entstehen, wenn das Programmiergerät missbräuchlich verwendet wird.

Aus der EP-A-0 671 528 ist es bekannt, einen Ersatzschlüssel mit Hilfe eines zusätzlichen Master-Keys einem Fahrzeug zuzuordnen.

Schließlich ist es aus der EP-A-0 870 654 bekannt, aus einer Reihe von bekannten und registrierten Schlüsseln den gerade verwendeten zu identifizieren und für die Benutzung des jeweiligen Fahrzeugs freizugeben.

Insgesamt ist festzustellen, dass der allgemeine Trend die Diebstahl- und Einbruchssicherheit zu erhöhen, gegensinnig zu der Notwendigkeit des Kundendienstes verläuft, das Fahrzeug zu öffnen bzw. auch zu bewegen, wenn der Original- Schlüssel nicht vorhanden ist, was z.B. bei Verlust oder gar bei einem unabsichtlich im Fahrzeug eingesperrten Original- Schlüssel der Fall sein kann. Das Problem steigert sich noch beim Einsatz von einbruchshemmender Verglasung.

Der Erfindung liegt die Aufgabe zugrunde, ein Verfahren der eingangs genannten Art zu schaffen, das einfach im Ablauf und der Handhabung ist und das gegenüber einem Missbrauch geschützt ist.

Die Erfindung löst diese Aufgabe mit den im Patentanspruch 1 angegebenen Mitteln.

Wesentlich für die Erfindung ist die Authentisierung des Ersatzschlüssels durch die Zentrale. Da die Identifikationsnummer des Ersatzschlüssels der Zentrale übermittelt und dort überprüft wird, kann die offensichtlich mißbräuchliche Verwendung eines beispielsweise verlorenen Ersatzschlüssels, sofern sie der Zentrale bekannt ist, erkannt und die Ausgabe des Freigabesignals von der Zentrale an das Fahrzeug verhindert werden.

Vorteilhafte Ausgestaltungen der Erfindung sind Gegenstand der weiteren Patentansprüche und werden anhand des in den Figuren dargestellten Verfahrensablaufs näher erläutert.

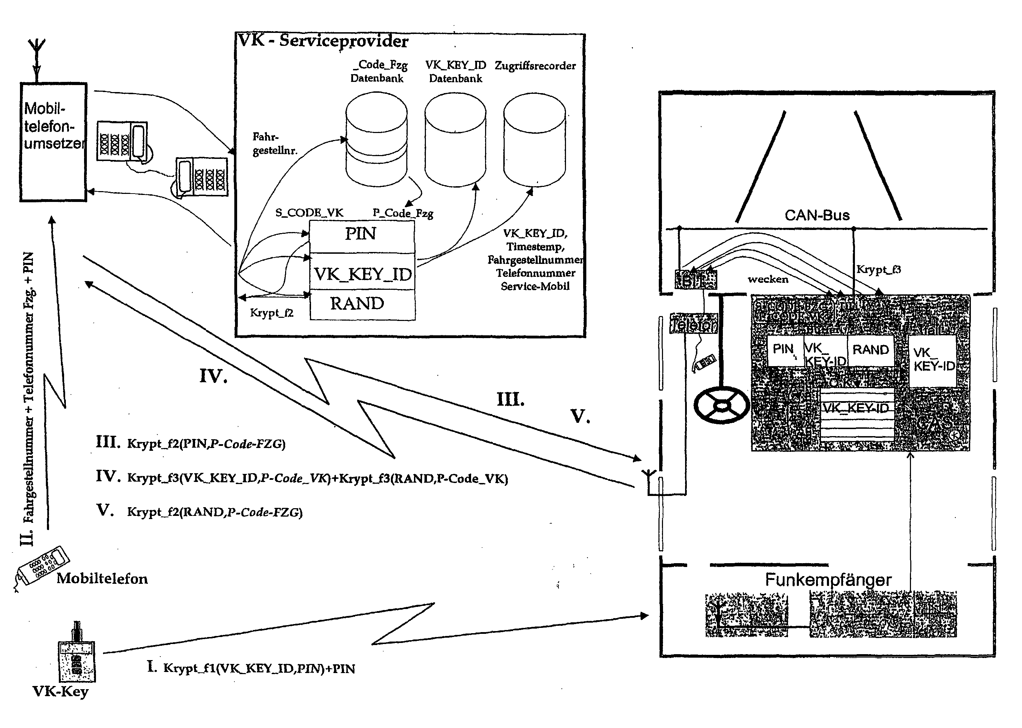

Die einzige Figur zeigt ein Blockschaltbild, in dem die im Rahmen des erfindungsgemäßen Verfahrens wirksamen Schaltstellen und Übertragungswege gezeigt sind,

Das hier beschriebene Verfahren bietet die Möglichkeit zum Öffnen und zur Inbetriebnahme eines Fahrzeugs mit Hilfe eines universell verwendbaren Ersatz-Schlüssels ohne die Wirkung des Diebstahlschutzes zu verringern. Dabei wird mittels einer Authentisierung des Ersatz-Schlüssels durch eine Zentrale unter Nutzung des Autotelefons und einer zentralen Datenbank eine Berechtigung, mit Hilfe des Ersatzschlüssels das Fahrzeug zumindest zu öffnen, temporär erteilt.

Der universell verwendbare Ersatz-Schlüssel wird im folgenden VK-Key genannt. Weitere Wirkstellen im Rahmen des Verfahrens sind eine die zentrale Datenbank (genannt VK-Datenbank) ein im Fahrzeug vorhandenes Autotelefon, ein Basis-Interface Telefon (genannt BIT-Interface) sowie ein Mobiltelefon eines Kundendienstmitarbeiters, der den Ersatz-Schlüssel zur Anwendung bringt. Wesentlich ist ferner, daß für Telefonverbindungen vorzugsweise asynchrone Algorithmen verwendet werden. Dadurch besteht für die Telefonverbindungen keine Notwendigkeit, eine Abhörsicherheit zu erzielen. Unter einem asynchronen Algorithmus ist ein Verschlüsselungsverfahren zu verstehen, bei dem in einer Richtung mit einem öffentlichen Verschlüsselungsalgorithmus (public-key) und zur Entschlüsselung mit einem geheimen Verschlüsselungsalgorithmus (secret-key) gearbeitet wird.

Die Auswertung der im Fahrzeug eingehenden Signale wird bevorzugt durch das als Wegfahrsicherheitseinrichtung dienende CAS-Steuergerät (CAS= Car Access System) vorgenommen, das über einen Ringspeicher verfügt, in dem die erfolgreichen VK-Key Authentisierungen gespeichert und in einem Attack-Speicher evtl. Manipulationsversuche abgelegt sind.

Der gesamte Vorgang zum Öffnen des Fahrzeugs mit Hilfe des Ersatz-Schlüssels vollzieht sich in 5 Stufen I-V.
I) Durch Betätigen einer Befehlstaste am VK-Key generiert der Ersatz-Schlüssel eine Zufalls-Zahl PIN, die einerseits unverschlüsselt und andererseits zusammen mit einer individuellen Kennung des Ersatz-Schlüssels VK_KEY_ID mit einem nicht geheimen (=öffentlichen) Code verschlüsselt an das Fahrzeug übertragen wird. Das Fahrzeug nimmt über einen Funkempfänger dieses drahtlos übertragenene, verschlüsselte Signal Krypt_fl(VK_KEY_ID,PIN) und die Zufalls-Zahl PIN auf und leitet sie dem CAS zu, wo die Kennung des Ersatz-Schlüssels VK_KEY_ID aufgrund der Kenntnis der Zufalls-Zahl PIN entschlüsselt wird.
II) Der Servicetechniker überträgt vorzugsweise mittels seines Mobiltelefons an die VK-Datenbank folgende Daten:
   Zufalls-Zahl PIN, sowie die Telefonnummer und Fahrgestellnummer des Fahrzeugs. Bei einer telefonischen Übermittlung ist eine Codierung nicht erforderlich.
   Die VK-Datenbank holt unter Verwendung der Fahrgestellnummer den entsprechenden Public-Key des Fahrzeugs (P-CODE - FZG) und verschlüsselt die Zufalls-Zahl PIN damit.
III) Von der VK-Datenbank aus wird das Telefon des Fahrzeugs angewählt und die so verschlüsselte Zufalls-Zahl PIN übertragen, welche dort empfangen und an das CAS-Steuergerät weitergeleitet wird. Das CAS besitzt einen geheimen Entschlüsselungsalgorithmus Secret- Key (S-CODE-Fzg), der es in die Lage versetzt, ohne eigentliche Kenntnis der Zufalls-Zahl PIN diese PIN rückzubilden. Die PIN wird dann mit der im Schritt I erhaltenen verglichen.
IV) Sind die beiden PINs identisch, erzeugt das CAS eine eigene Zufallszahl RAND. RAND und die dorthin im Schritt I übertragenen Kennung VK_KEY-ID des Ersatz-Schlüssels werden jedes für sich mit einem Public Key P-CODE-VK verschlüsselt und über das Telefon des Fahrzeugs an die VK-Datenbank übertragen.
   Dort wird mittels des Secret Key S-CODE-VK der VK-Datenbank die Zufallszahl RAND und der VK-Key-ldentifier VK_KEY-ID rückgebildet und überprüft, ob der VK-Key-ldentifier VK_KEY-ID einem gültigen Ersatz-Schlüssel zugeordnet ist. Für diese Rückbildung ist die separate Kenntnis der Zufallszahl RAND nicht erforderlich.
V) Ist der VK-Key-ldentifier gültig, so wird als Rückmeldung die Zufallszahl RAND mit einem Public-Key P - CODE-Fzg verschlüsselt und an das CAS ins Fahrzeug übertragen. Dieses kann mit seinem Secret Key S-CODE-Fzg die Zufalls-zahl RAND rückbilden und mit der in seinem Speicher vergleichen. Sind die beiden identisch, so wird dies als Bestätigung der Gültigkeit des Ersatz-Schlüssels VK_Key ausgelegt und mit dem VK_Key aufgegebene Befehle ausgeführt.

## Patentansprüche

1. Verfahren zum Authentisieren eines Ersatzschlüssels zum Benutzen eines Fahrzeugs ohne den regulären Schlüssel, wobei der Ersatzschlüssel (VK-Key) eine Identifikationsnummer (VK_KEY_ID) besitzt, die einer Zentrale (VK - Serviceprovider) übermittelt und dort überprüft wird und dass der Ersatzschlüssel durch Aufgabe eines Freigabesignals von der Zentrale an das Fahrzeug authentisiert wird, **dadurch gekennzeichnet, dass** vorbereitend eine Zufalls-Zahl (PIN) direkt zum Fahrzeug und indirekt nach Übermittlung zur Zentrale mittels eines asynchronen Algorithmus verschlüsselt zum Fahrzeug übertragen und dort nach Entschlüsselung mit der direkt übermittelten Zufalls-Zahl verglichen wird.

2. Verfahren nach Anspruch 1,
**dadurch gekennzeichnet, dass** die Datenübermittlung in einer Richtung von der Übermittlung eines Bestätigungssignals in entgegen gesetzter Richtung gefolgt wird.

3. Verfahren nach Anspruch 1 oder 2,
**dadurch gekennzeichnet, dass** die Datenübermittlung per Telefon vorgenommen wird.

## Claims

1. A method for authenticating a spare key for the use of a vehicle without the regular key, wherein the spare key (VK-key) has an identification number (VK_KEY_ID), which is transmitted to a central station (VK-service provider) and is checked there and in that the spare key is authenticated by the transmission of an enable signal from the central station to the vehicle, **characterised in that**, in preparation, a random number (PIN) is transmitted directly to the vehicle and, after transmission to the central station, indirectly transmitted to the vehicle encoded by means of an asynchronous algorithm and, after decoding, is compared there with the directly transmitted random number.

2. A method according to claim 1, **characterised in that** the data transmission in one direction is followed by the transmission of a confirmation signal in the opposite direction.

3. A method according to claim 1 or 2, **characterised in that** the data transmission takes place by telephone.

## Revendications

1. Procédé d'authentification d'une clé de remplacement pour l'utilisation d'un véhicule sans la clé d'origine, la clé de remplacement (VK-Key) possédant un numéro d'identification (VK_KEY_ID) transmis à une centrale (VK - serviceprovider) où il est vérifié et la clé de remplacement est authentifiée par l'émission, par la centrale, d'un signal de déblocage vers le véhicule,
**caractérisé en ce qu'**
au préalable, un nombre aléatoire (PIN) est transmis directement au véhicule puis indirectement, après transmission à la centrale, de manière codée au moyen d'un algorithme asynchrone, et comparé alors au nombre aléatoire transmis directement.

2. Procédé selon la revendication 1,
**caractérisé en ce que**
la transmission de données dans une direction est suivie par la transmission d'un signal de confirmation dans la direction opposée.

3. Procédé selon la revendication 1 ou 2,
**caractérisé en ce que**
la transmission de données s'effectue par téléphone.
